# EUROPÄISCHE PATENTSCHRIFT

(11) **EP 0 929 596 B1**
(45) Veröffentlichungstag und Bekanntmachung des Hinweises auf die Patenterteilung: **01.12.2004**
(21) Anmeldenummer: 97910340.5
(22) Anmeldetag: 24.09.1997
(51) Int. Cl.: C08G 75/02

(54) **VERFAHREN ZUR HERSTELLUNG VON SCHWEFELHALTIGEN POLYMEREN**
PROCESS FOR PREPARING SULPHUROUS POLYMERS
PROCEDE DE FABRICATION DE POLYMERES SULFURES

(30) Priorität: 02.10.1996 DE 19640737
(43) Veröffentlichungstag der Anmeldung: 21.07.1999
(73) Patentinhaber: Ticona GmbH, 65451 Kelsterbach (DE)
(72) Erfinder: HAUBS, Michael, D-55545 Bad Kreuznach (DE); WAGNER, Stephan, D-65197 Wiesbaden (DE); BESSER, Olaf, D-65931 Frankfurt (DE)
(86) Internationale Anmeldenummer: PCT/EP1997/005229
(87) Internationale Veröffentlichungsnummer: WO 1998/014503

(56) Entgegenhaltungen:
- EP-A- 0 220 490
- EP-A- 0 737 705
- US-A- 4 910 294

## Beschreibung

Die Erfindung betrifft ein Verfahren zur Herstellung von linearen oder verzweigten schwefelhaltigen Polymeren wie Polyarylensulfiden, insbesondere von Polyphenylensulfid (PPS).

US 4,910,294 beschreibt ein Verfahren zur Herstellung von PPS.
Als Monomere werden dihalogenierte, aromatische Kohlenwasserstoffe, insbesondere Dichlorbenzol (DCB), und Natriumsulfid eingesetzt, die in einem hochsiedenden, dipolar aprotischen Lösungsmittel wie N-Methylpyrrolidon (NMP) zur Reaktion gebracht werden. Das als Nebenprodukt entstehende Natriumchlorid wird nach Abschluß der Polymerisation entweder, wie in EP 220490 beschrieben, durch Heißfiltration der Reaktionslösung bei erhöhter Temperatur unter Druck oder durch Lösen in Wasser von dem Polymeren abgetrennt. Nach dem Stand der Technik ist die Molmasse des Endproduktes der Polykondensation erreicht, bevor das Natriumchlorid abgetrennt wird.

Nachteilig bei diesem Herstellungsverfahren ist aber, daß die Raum-Zeit-Ausbeute der Reaktoren unbefriedigend ist, weil eine relativ lange Reaktionszeit erforderlich ist.

Es besteht daher die Aufgabe diesen Nachteil zu vermeiden.

Überraschend wurde nun gefunden, daß eine Abtrennung des Salzes vor dem Abschluß der Polymerisationsreaktion die Reaktionszeit insgesamt verkürzt und zu höheren Molmassen führt. Vermutlich führt der Sulfidanteil im festen Salzrückstand aus der Polymerisation eines Polyarylensulfids zu einem signifikanten Molmassenabbau des hochpolymeren Arylensulfids, bzw. behindert einen raschen Molmassenaufbau.

Gegenstand der Erfindung ist somit ein Verfahren zur Herstellung von schwefelhaltigen Polymeren aus mindestens einer aromatischen Dihalogenverbindung und mindestens einem Sulfid in einem Lösungsmittel, wobei
a) die aromatische Dihalogenverbindung und das Sulfid zur teilweisen Reaktion gebracht werden
b) das entstehende, im Reaktionsmedium praktisch unlösliche Salz abgetrennt wird und
c) die vom Salz weitgehend befreite Reaktionsmischung weiter polymerisiert wird.

Es ist somit gelungen, bei der Herstellung von schwefelhaltigen Polymeren, insbesondere Polyarylensulfiden aus aromatischen Dihalogenverbindungen und Alkalisulfiden, die Raum-Zeit-Ausbeute erheblich zu verbessern, weil das als Nebenprodukt entstehende Salz vor dem Abschluß der Polykondensation abgetrennt wird und die vom Salz weitgehend befreite, noch nicht vollständig polymerisierte Reaktionsmischung der Restpolymerisation leichter zugänglich ist.

Es werden nach dem Verfahren gemäß der Erfindung schwefelhaltige Polymere, insbesondere Polyarylensulfide, über einen weiten Molmassenbereich (z.B. Mw = 10 000 - 200 000 g/mol) in guter Raum-Zeit-Ausbeute bei möglichst milden Reaktionsbedingungen und mit möglichst geringer Verunreinigung durch Nebenprodukte erhalten.

Schwefelhaltige Polymere sind Polymere, die Arylensulfid-Einheiten enthalten. Die Arylen-Bestandteile der Arylensulfid-Einheiten enthalten ein- oder mehrkemige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenanthren. Substituenten sind unter anderem C1-C6-Alkyl-, C1-C6-Alkoxy-, Carboxyl-, Amino- und Sulfonsäure-Gruppen. Verbundene Aromaten sind zum Beispiel Biphenyl oder durch Etherbrücken verbundene Aromaten (Arylenether).

Bevorzugte schwefelhaltige Polymere sind Polyarylensulfide, insbesondere Polyphenylensulfid.

Die zur Herstellung der Polyarylenverbindungen eingesetzten aromatischen Dihalogenverbindungen sind beispielsweise dihalogenierte aromatische Kohlenwasserstoffe, unter anderem Dihalogenbenzole wie o-, m- und p-Dichlorbenzol, substituierte Dihalogenbenzole wie 2,5-Dichlortoluol, 3,5-Dichlorbenzoesäure, 2,5-Dichlorbenzolsulfonsäure oder 3,5- Dichlorbenzolsulfonsäure oder deren Salze. Aber auch Dihalogennaphthaline wie 1,4-Dibromnaphthalin oder Dihalogendiphenyläther wie 4,4' Dichlordiphenyläther können eingesetzt werden. Ebenso können Gemische von verschiedenen Arylendihalogeniden eingesetzt werden. Es können auch kleine Mengen (0,2 bis 5 Mol-prozent bezogen auf Dihalogenaromat) von polyhalogenierten aromatischen Kohlenwasserstoffen eingesetzt werden, um zu verzweigten oder vernetzten schwefelhaltigen Polymeren zu gelangen.

Als Sulfid für die Herstellung der Polymeren eignen sich anorganische und organische Sulfide. Anorganische Sulfide sind Sulfide der Alkali- und ErdalkaliMetalle, wie Lithiumsulfid, Kaliumsulfid, Calciumsulfid und bevorzugt Natriumsulfid. Es können auch die entsprechenden Hydrogensulfide oder Schwefelwasserstoff eingesetzt werden, gegebenenfalls in Verbindung mit Alkalihydroxiden.

Als organische Sulfide eignen sich salzartige Sulfide mit organischen Kationen. Organische Sulfide, die bei der vorliegenden Erfindung eingesetzt werden können, sind auch solche organischen Schwefelverbindungen, die unter den Reaktionsbedingungen Sulfid oder Hydrogensulfidanionen freisetzen, wie Thioacetamid, Schwefelkohlenstoff oder Thio-N-Methylpyrrolidon. Die Sulfide können auch Kristallwasser enthalten.

Dihalogenaromaten und Sulfid werden im allgemeinen auch als Monomere bezeichnet.

Als Lösungsmittel für die Herstellung des Polymeren eignen sich dipolar aprotische Lösungsmittel vom Amidtyp wie Dimethylformamid (DMF), Dimethylacetamid (DMAc), N-Methylcaprolactam oder N-alkylierte Pyrrolidone wie N-Methylpyrrolidon (NMP) oder Mischungen davon. Besonders bevorzugt ist NMP.

Zur Herstellung des schwefelhaltigen Polymeren nach dem Verfahren gemäß der Erfindung wird in Schritt a) die aromatische Dihalogenverbindung mit dem Sulfid in einem Lösungsmittel bis zu etwa 40 bis 98 % (bezogen auf die aromatische Dihalogenverbindung) umgesetzt. Zu diesem Zeitpunkt enthält die Reaktionsmischung a) das niedermolekulare Polymer, weitgehend ungelöstes Salz (z.B. Natriumchlorid), nicht umgesetzte Monomere und das Lösemittel. Das bei der Reaktion gebildete, ausgefallene Salz wird in Schritt b) aus der Reaktionsmischung zum Beispiel durch Heißfiltration abgetrennt. Zweckmäßigerweise erfolgt die Filtration bei einer Temperatur, bei der das schwefelhaltige Polymere in der Reaktionsmischung flüssig oder gelöst vorliegt. Anschließend wird in Schritt c) die vom ausgefallenen Salz weitgehend befreite Reaktionsmischung gegebenenfalls unter Druck weiter polymerisiert. Abschließend wird das Polymere aus der Reaktionsmischung nach bekannten Verfahren isoliert.

Die Reaktionsbedingungen für Schritt a) können in weiten Grenzen variiert werden. So können die Reaktionstemperaturen bei 180 °C bis 280 °C liegen, bevorzugt sind 220 bis 260 °C. Die Reaktionszeiten können 10 Minuten bis 20 Stunden betragen, bevorzugt sind 30 Minuten bis 3 Stunden. Auch Temperaturprogramme können mit Vorteil verwendet werden, z.B. 30 Minuten bei 225 °C und anschließend 1 Stunde bei 245 °C.

Die mittlere Molmasse, ausgedrückt durch das Gewichtsmittel Mw, liegt nach Schritt
a) im Bereich von 1 000 bis 30 000 g/mol, bevorzugt von 2 000 bis 20 000 g/mol und insbesondere von 3 000 bis 15 000 g/mol.

Am Ende von Schritt a) liegt das Salz weitgehend als kristalliner Niederschlag in der Reaktionsmischung vor und wird durch geeignete Methoden abgetrennt.

Die Abtrennung des Salzes aus der Reaktionsmischung erfolgt bei einem Reaktionsumsatz, bezogen auf die aromatische Dihalogenverbindung, von 40 bis 98 %, bevorzugt bei 50 bis 96 %, und insbesondere bei 60 bis 94 %.

Die Abtrennung des Salzes kann durch einfache Druckfiltration bei einer Temperatur erfolgen, bei der das Polymere in der Reaktionsmischung flüssig oder gelöst vorliegt. Im allgemeinen liegen diese Temperaturen bei 100 bis 300 °C. Anstelle der Druckfiltration können aber auch andere Verfahren zur Abtrennung von Feststoffen aus Flüssigkeiten eingesetzt werden, z.B. Zentrifugieren oder Dekantieren.

Gewöhnlich wird während der Reaktion unter Schritt a) chemisch gebundenes Hydratwasser freigesetzt. Für die Filtration in Schritt b) kann es vorteilhaft sein, das Reaktionswasser ganz oder teilweise zu entfernen. Wahlweise kann vor der Aufarbeitung der Reaktorinhalt durch Zugabe von Säuren neutral oder schwach sauer gestellt werden. Geeignete Säuren sind z. B. Essigsäure, Salzsäure oder Kohlendioxid.

Der Filtrationsrückstand wird zweckmäßigerweise mit Lösungsmittel gewaschen, um anhaftende Mutterlaugenreste zu entfernen. Die dadurch erhaltene verdünnte Polymerlösung kann aufkonzentriert und mit dem Filtrat vereinigt werden. Der feuchte Filterkuchen wird getrocknet, um anhaftende Lösemitelreste zurückzugewinnen. Als Resultat dieser Trennoperation erhält man Salz als Feststoff und das Polymer gelöst in dem Filtrat.

Das Filtrat wird dann in Schritt c) weiter polymerisiert. Es ist auch möglich, vor Schritt c) die Konzentration der Polymere zu erhöhen, indem die filtrierte Reaktionmischung durch Verdampfen von Lösungsmittel und anderer flüchtiger Komponenten eingeengt wird. Es hat sich als vorteilhaft erwiesen, die Aufkonzentration bis auf einen Polymergehalt von 20 bis 70 Gew.-%, bevorzugt von 30 bis 60 Gew.-% durchzuführen.

Außerdem können zwischen Schritt b) und c) bis zu 20 mol %, bevorzugt 0,5 bis 5 mol %, bezogen auf die in Schritt a) eingesetzte Stoffmenge, eines der beiden Monomere zugesetzt werden, um eine möglichst genaue stöchiometrische Äquivalenz zwischen Sulfid und aromatischer Dihalogenverbindung zu gewährleisten. Schließlich können durch Durchleiten von Wasserdampf flüchtige Komponenten aus dem Gemisch entfernt werden, um unerwünschte Bestandteile zu entfernen.

Die Reaktionsbedingungen für die weitere Polymerisation in Schritt c) können in weiten Grenzen variiert werden. So können die Reaktionstemperaturen bei 180 °C bis 290 °C liegen, bevorzugt sind 230 bis 270 °C. Die Reaktionszeiten können 10 Minuten bis 10 Stunden betragen. Bevorzugt sind 20 Minuten bis 2 Stunden. Für die Fortsetzung der Polymerisation in Schritt c) können wahlweise zusätzlich Maßnahmen getroffen werden, die nach dem Stand der Technik zur Erzielung möglichst hoher Molmassen führen. Dazu zählt beispielsweise der Zusatz von Promotoren. Solche Promotoren-sind zum Beipiel Alkali- und Erdalkalisalze niederer Carbonsäuren, insbesondere Natriumacetat. Es ist ebenfalls möglich, in Schritt c) definierte Mengen Wasser zuzusetzen, um nach dem Stand der Technik die weitere Polymerisation in einem zweiphasigen Reaktionssystem zu führen. Schließlich können weitere Zusatzstoffe z.B. Säuren wie Essigsäure oder Schwefelwasserstoff oder Kohlendioxid zugesetzt werden, um die Basenstärke des Systems einzustellen.

Die Molmassen M_{w} nach Schritt c) liegen über denen von Schritt a) und zwar bei 5 000 bis 200 000, bevorzugt 10 000 bis 150 000 und insbesondere bei 20 000 bis 100 000 g/mol.

Alle Phasen der Polymerherstellung können entweder absatzweise oder kontinuierlich geführt werden. Beispielsweise kann die kontinuierliche Reaktionsführung mittels einer Rührkesselkaskade, in einem Strömungsrohr oder einer Kombination beider verwirklicht werden.

Für die Isolierung des Polymeren stehen verschiedene Methoden zur Verfügung. Die Abtrennung des Polymeren erfolgt durch einfache Druckfiltration. Aber auch andere Verfahren zur Abtrennung von Feststoffen aus Flüssigkeiten können eingesetzt werden, z.B. Zentrifugieren oder Dekantieren. Es ist auch möglich, die entstandene Suspension in einer Entspannungsverdampung oder Sprühtrocknung aufzuarbeiten. Dabei werden Lösungsmittel und weitere niedermolekulare Substanzen als Hauptbestandteile dampfförmig abgezogen, das Polymer fällt als weitgehend trockener Feststoff an.

Das Verfahren gemäß der Erfindung wird im folgenden am Beispiel der Herstellung von Polyphenylensulfid (PPS) beschrieben, ohne jedoch darauf beschränkt zu sein.

Natriumsulfid-Trihydrat wird im Titanautoklaven in NMP bei 180 °C gelöst. Anschließend wird ein Teil des Hydratwassers abdestilliert, bis eine Innentemperatur von 195 °C erreicht ist. Der Autoklaveninhalt wird weiter erwärmt und bei einer Temperatur von 215 bis 220 °C wird p-Dichlorbenzol (DCB) zudosiert. Es wird nun 30 Minuten bis 1 Stunde bei 230°C polymerisiert. Das so entstandene Reaktionsgemisch wird bei 230°C durch einen Filter in ein zweites Reaktionsgefäß filtriert und dort für weitere 90 Minuten auf 250 °C erwärmt. Danach wird der Reaktor auf 140°C abgekühlt und das Reaktionsgut filtriert. Der Filterkuchen aus PPS wird in Wasser aufgekocht, mehrmals mit Wasser gewaschen und getrocknet.

Die Schmelzpunkte der Polyphenylensulfide liegen bei 270°C bis 305°C, typisch sind 280 bis 295 °C. Die Schmelzviskosität liegt im Bereich von 5 bis 1000 Pas, bevorzugt bei 20 bis 500 Pas. Die Schmelzeviskosität ist ohne Zusätze stabil: Bei 300 °C verändert sie sich über einen Zeitraum von einer Stunde um weniger als 10%.

Die nach dem Verfahren gemäß der Erfindung hergestellten schwefelhaltigen Polymere wie Polyarylensulfide, insbesondere Polyphenylensulfid, zeichnen sich durch eine hohe Reinheit und hohe Qualität aus. Besonders bemerkenswert ist die Eigenschaft, daß die Polymere praktisch keinen Geruch und keine Verfärbung aufweisen. Auch weisen die Polymere ein günstiges Verhalten bei thermischer Belastung auf.

Ein weiterer Gegenstand der Erfindung ist ein salzfreies schwefelhaltiges Polymer, z.B. ein Polyarylensulfid, vorzugsweise Polyphenylensulfid, hergestellt nach dem Verfahren gemäß der Erfindung.

Die gemäß der Erfindung hergestellten schwefelhaltigen Polymere lassen sich durch Schmelzextrusion zu Formkörpern verarbeiten. Aber auch Folien und Fasern mit guten mechanischen Eigenschaften lassen sich herstellen.

### Beispiele:

1) in einem 2-Liter-Titanautoklaven wurden 284 g Natriumsulfid-Trihydrat (ca. 60 %ig; 2,2 Mol) in 780 g NMP unter Rühren bei 180°C gelöst. Anschließend wurden bei Atmosphärendruck ca. 130 ml Kondensat abdestilliert. Der Inhalt des verschlossenen Autoklavs wurde auf 230°C erhitzt und ab 215°C wurden 418 g p-DCB (1,3 x 2,2 Mol), warm gelöst in 220 g NMP, mit einer Rate von 20 ml/Minute zugegeben. Anschließend wurde 90 Minuten bei 235°C polymerisiert und danach der Autoklav auf etwa 2.5 bar entspannt, um das Reaktionswasser weitgehend zu entfernen. Dabei wurde die Temperatur über 225 °C gehalten. Anschließend wurde der Reaktorinhalt bei 230 °C und etwa 5 bar Druck über ein PTFE-Fittertuch mit einer nominellen Porengröße von 12 µm in einen zweiten Autoklaven filtriert, aus dem durch Durchleiten von Wasserdampf überschüssiges DCB weitgehend entfernt wurde. Nach der Zugabe von 4 g Natriumsulfid (60 %ig) wurde der Ansatz 90 Minuten bei 230 °C auspolymerisiert, mit ca. 300 ml NMP verdünnt und abgekühlt. Die kristalline Reaktionsmasse wurde abfiltriert, der Rückstand mehrmals in Wasser aufgekocht, abfiltriert und getrocknet. Ausbeute an PPS-Polymer: 205 g . Die mittlere Molmasse des Polymers beträgt Mw = 28 000 g/mol.
2) Das Polymere aus Beispiel 1 (reinweiß) und handelsübliches Polyphenylensulfid mit einer Schmelzviskosität von 500 Poise, gemessen bei 310°C und einer Scherrate von 1 000 sec⁻¹, wurden bei 250°C über 3 Tage an Luft gelagert. Die abgekühlten Proben zeigen im Fall des Polymeren aus Beispiel 1 kaum eine Verfärbung, während Fortron 205 sich von weiß nach dunkelbraun verfärbte.(®Fortron 205, Hersteller: Fortron Industries, Wilmington NC, USA).

### Beispiel 3

Dieses Beispiel zeigt, daß der Kochsalzrückstand aus Beispiel 1 Natriumsulfid enthält:
20 g des aus Beispiel 1 erhaltenen Kochsalz-Rückstandes wurden in 200 ml Wasser gelöst, in eine Gaswaschflasche gegeben und mit 10 ml 20 %iger Salzsäure angesäuert. Anschließend wurde die Gaswaschflasche mit Stickstoff durchströmt und der Stickstoffstrom in einer zweiten Gaswaschflasche mit 100 ml 4 %iger Natronlauge gewaschen. Nach einer Stunde wurde der Inhalt der zweiten Gaswaschflasche mit ammoniakalischer Silbemitrat-Lösung versetzt, der entstandene tief schwarze Silbersulfidniederschlag abfiltriert, und mit Wasser gut gewaschen. Das getrocknete Silbersulfid wog 1,3 g. Dies entspricht einem Gehalt an Natriumsulfid in dem so analysierten Kochsalzrückstand von 2 Gew.-%.

### Beispiel 4

Dieses Beispiel zeigt, daß der im Kochsalz enthaltene Sulfidanteil unter Reaktionsbedingungen das Molekulargewicht von PPS deutlich verkleinert:
Der durch Heißfiltration aus Beispiel 1 erhaltene Kochsalz-Rückstand wurde mehrmals mit 230°C heißem NMP unter Druck gewaschen, um letzte Mutterlaugenreste zu entfernen. In einem 2 Liter Titanautoklaven wurden 270 g des so gereinigten, NMP-feuchten Kochsalzes (ca. 25 Gew.-% NMP) zusammen mit 200 g PPS (Fortron 205), 1 Liter NMP und 10 g Wasser für eine Stunde auf 235°C unter Rühren erwärmt. Der erkaltete Reaktorinhalt wurde filtriert und der Filtrationsrückstand zweimal in 2,5 Liter Wasser aufgekocht, filtriert und gewaschen. Abschließend wurde das so erhaltene PPS 24 Stunden bei 130°C im Vakuumtrockenschrank getrocknet. Die Schmelzviskosität des Polymeren betrug bei 310°C und 1000 sec⁻¹ 35 Pas, verglichen mit 60 Pas für das eingesetzte Fortron 205.

## Patentansprüche

1. Verfahren zur Herstellung von schwefelhaltigen Polymeren aus mindestens einer aromatischen Dihalogenverbindung und einem Sulfid in einem Lösungsmittel, **dadurch gekennzeichnet, daß**
a) die aromatische Dihalogenverbindung und das Sulfid zur teilweisen Reaktion gebracht werden,
b) das entstehende, im Reaktionsmedium ungelöste Salz abgetrennt und
c) die vom Salz weitgehend befreite Reaktionsmischung weiter polymerisiert wird.

2. Verfahren nach Anspruch 1, **dadurch gekennzeichnet, daß** die Abtrennung der polymerisierten Mischung dann erfolgt, wenn der Umsatz bezogen auf aromatische Dihalogenverbindung in Schritt a) einen Wert im Bereich von 40 bis 98 %, bevorzugt von 50 bis 96 % und besonders bevorzugt von 60 bis 94 %, erreicht hat.

3. Verfahren nach Anspruch 1 oder 2, **dadurch gekennzeichnet, daß** die mittlere Molmasse, ausgedrückt als Gewichtsmittel M_{w}, nach Schritt a) im Bereich von 1 000 bis 30 000 g/mol, bevorzugt von 2 000 bis 20 000 g/mol und insbesondere bevorzugt von 3 000 bis 15 000 g/mol, liegt.

4. Verfahren nach einem oder mehreren der Ansprüche 1 bis 3, **dadurch gekennzeichnet, daß** das Salz bei einer Temperatur abgetrennt wird, bei der das Polymere in der Reaktionsmischung flüssig oder gelöst ist.

5. Verfahren nach einem oder mehreren der Ansprüche 1 bis 4, **dadurch gekennzeichnet, daß** nach Schritt b) die Reaktionsmischung durch Destillation eingeengt wird.

6. Verfahren nach einem oder mehreren der Ansprüche 1 bis 5, **dadurch gekennzeichnet, daß** nach Schritt b) vor Schritt c) bis zu 20 mol%, bevorzugt 0,5 bis 5 mol% Sulfid oder aromatische Dihalogenverbindung, bezogen auf die in Schritt a) eingesetzte Stoffmenge, zugesetzt werden.

7. Verfahren nach einem oder mehreren der Ansprüche 1 bis 6, **dadurch gekennzeichnet, daß** vor Schritt c) die Reaktionsmischung einer Wasserdampfdestillation unterzogen wird.

8. Verfahren nach Anspruch 1, **dadurch gekennzeichnet, daß** die mittlere Molmasse M_{w} nach Schritt c) im Bereich von 5 000 bis 200 000, vorzugsweise 10 000 bis 150 000 und insbesondere 20 000 bis 100 000 g/mol liegt.

9. Verfahren nach einem oder mehreren der Ansprüche 1 bis 8, **dadurch gekennzeichnet, daß** das schwefelhaltige Polymere ein Polyarylensulfid ist.

## Claims

1. A process for the preparation of sulfur-containing polymers from at least one aromatic dihalo compound and one sulfide in a solvent, which comprises
a) partially reacting the aromatic dihalo compound and the sulfide,
b) removing the salt formed, which is undissolved in the reaction medium, and
c) further polymerizing the reaction mixture, substantially freed from the salt.

2. The process as claimed in claim 1, wherein the polymerized mixture is removed when the conversion, based on aromatic dihalo compound in step a), has reached a value in the range from 40 to 98%, preferably 50 to 96% and particularly preferably 60 to 94%.

3. The process as claimed in claim 1 or 2, wherein the average molar mass, expressed as the weight-average M_{w}, after step a) is in the range from 1000 to 30,000 g/mol, preferably 2000 to 20,000 g/mol and particularly preferably 3000 to 15,000 g/mol.

4. The process as claimed in one or more of claims 1 to 3, wherein the salt is removed at a temperature at which the polymer is in the liquid or dissolved state in the reaction mixture.

5. The process as claimed in one or more of claims 1 to 4, wherein the reaction mixture is concentrated by distillation after step b).

6. The process as claimed in one or more of claims 1 to 5, wherein up to 20 mol%, preferably 0.5 to 5 mol% of sulfide or aromatic dihalo compound, based on the amount of substance used in step a), are added after step b) and before step c).

7. The process as claimed in one or more of claims 1 to 6, wherein the reaction mixture is subjected to a steam distillation before step c).

8. The process as claimed in claim 1, wherein the average molecular weight M_{w} after step c) is in the range from 5000 to 200,000, preferably 10,000 to 150,000 and in particular 20,000 to 100,000 g/mol.

9. The process as claimed in one or more of claims 1 to 8, wherein the sulfur-containing polymer is a polyarylene sulfide.

## Revendications

1. Procédé pour la préparation de polymères contenant du soufre constitués par au moins un composé dihalogéné aromatique et un sulfure dans un solvant, **caractérisé en ce que**
a) le composé dihalogéné aromatique et le sulfure sont amenés partiellement en réaction,
b) le sel formé non dissous dans le mélange réactionnel est séparé et
c) le mélange réactionnel libéré dans une large mesure du sel est polymérisé davantage.

2. Procédé selon la revendication 1, **caractérisé en ce que** la séparation du mélange polymérisé est réalisée lorsque la transformation, par rapport au composé dihalogéné aromatique dans l'étape a) a atteint une valeur située dans la plage de 40 à 98%, de préférence de 50 à 96% et de manière particulièrement préférée de 60 à 94%.

3. Procédé selon la revendication 1 ou 2, **caractérisé en ce que** le poids moléculaire moyen, exprimé en moyenne pondérale M_{w}, après l'étape a) est situé dans la plage de 1000 à 30 000 g/mole, de préférence de 2000 à 20 000 g/mole et de manière particulièrement préférée de 3000 à 15 000 g/mole.

4. Procédé selon l'une ou plusieurs des revendications 1 à 3, **caractérisé en ce que** le sel est séparé à une température à laquelle le polymère dans le mélange réactionnel est liquide ou dissous.

5. Procédé selon l'une ou plusieurs des revendications 1 à 4, **caractérisé en ce qu'**après l'étape b), le mélange réactionnel est concentré par distillation.

6. Procédé selon l'une ou plusieurs des revendications 1 à 5, **caractérisé en ce qu'**on ajoute, après l'étape b), avant l'étape c), jusqu'à 20% en mole, de préférence 0,5 à 5% en mole, de sulfure ou de composé dihalogéné aromatique, par rapport à la quantité de matière utilisée dans l'étape a).

7. Procédé selon l'une ou plusieurs des revendications 1 à 6, **caractérisé en ce qu'**avant l'étape c), le mélange réactionnel est soumis à une distillation à la vapeur d'eau.

8. Procédé selon la revendication 1, **caractérisé en ce que** le poids moléculaire moyen M_{w} après l'étape c) se situe dans la plage de 5 000 à 200 000, de préférence de 10 000 à 150 000 et en particulier de 20 000 à 100 000 g/mole.

9. Procédé selon l'une ou plusieurs des revendications 1 à 8, **caractérisé en ce que** le polymère contenant du soufre est un poly(sulfure d'arylène).
